# DEMANDE DE BREVET EUROPEEN

(11) **EP 2 343 351 A2**
(43) Date de publication de la demande: **13.07.2011**
(21) Numéro de dépôt: 10290638.5
(22) Date de dépôt: 02.12.2010
(51) Int. Cl.: C10G 3/00, C11B 3/10

(54) **Procédé de conversion de charges issues de sources renouvelables avec prétraitement des charges par déphosphatation à chaud**

(30) Priorité: 16.12.2009 FR 0906102
(71) Demandeur: IFP Energies nouvelles, 92852 Rueil-Malmaison Cedex (FR)
(72) Inventeur: Dandeu, Aurélie, 38540 Saint-Chaleyssin (FR); Coupard, Vincent, 69100 Villeurbanne (FR); Chapus, Thierry, 69001 Lyon (FR)

(57) **Abrégé**

L'invention concerne un procédé de prétraitement d'une huile végétale ou animale brute consistant en le passage de ladite huile dans un réacteur comprenant au moins un lit fixe d'au moins un adsorbant comprenant un oxyde réfractaire poreux dépourvu de métaux catalytiques, à une température comprise entre 130°C et 320°C, à une pression comprise entre 0,1 et 7 MPa et avec un temps de séjour de ladite huile sur ledit lit fixe compris entre 0,1 et 1 heure. L'invention concerne un procédé de prétraitement d'huile végétale ou animale semi raffinée, intégré en amont d'une étape d'hydrotraitement pour la production de gazole vert.

## Description

### Domaine de l'invention

Dans un contexte international marqué par la croissance rapide en besoin de carburants, en particulier en bases gazoles dans la communauté européenne, la recherche de nouvelles sources d'énergie renouvelables pouvant être intégrées au schéma traditionnel du raffinage et de la production de carburants, constitue un enjeu majeur.

A ce titre, l'intégration dans le processus de raffinage de nouveaux produits d'origine végétale, issus de la conversion de la biomasse lignocellulosique ou issus de la production d'huiles végétales ou de grasses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux carburants de type pétroliers dans les pools carburants. Une meilleure utilisation de ces bio ressources, comme par exemple leur intégration dans le pool carburant présenterait donc un avantage certain.

La forte demande en carburants gazoles, couplée avec l'importance des préoccupations liées à l'environnement renforce l'intérêt d'utiliser des charges issues de sources renouvelables. Parmi ces charges on peut citer par exemple les huiles végétales, les graisses animales, brutes ou ayant subi un traitement préalable, ainsi que les mélanges de telles charges. Ces charges contiennent des structures chimiques de type triglycérides ou esters ou acides gras, la structure et la longueur de chaîne hydrocarbonée de ces derniers étant compatibles avec les hydrocarbures présents dans les bases gazoles incorporables au pool carburant.

Les charges issues de sources renouvelables utilisées dans la présente invention sont les huiles brutes, définies comme étant les huiles végétales d'origine terrestre ou aquatique, ou animales. Elles sont composées majoritairement de triglycérides à hauteur de 80-98% poids. Les composés mineurs, c'est à dire présents à hauteur de 2 à 20% poids, sont des acides gras libres, des mono- et diglycérides, des composés oxydes de glycérides issus de la dégradation de l'huile, des polymères, des cires (hydrocarbures naturels présents dans l'huile) des protéines contenant du soufre et/ou de l'azote, des phospholipides, des tocophérols, des stérols, des colorants naturels ainsi que des composés odorants plus ou moins volatils. Lesdites huiles brutes contiennent également, comme composés mineurs, des espèces contenant des hétéroéléments tels que le phosphore, le magnésium, le calcium, le fer ou le zinc à des teneurs pouvant aller jusqu'à 2500 ppm, sous forme principalement de phospholipides et/ou de stérols dans le cas du phosphore, du magnésium et du calcium ou présents dans les pigments pour le cas particulier du magnésium et sous forme de stérols et/ou de savons dans le cas du fer et/ou du zinc. (Oils and fats manual : A comprehensive treatise, Volume 1 page 90, Karleskind A. et al.).

Un objectif de l'invention est de fournir un procédé de prétraitement des huiles brutes permettant l'élimination des hétéroéléments contenus dans les composés minoritaires tels que le phosphore, le magnésium, le calcium, le fer et/ou le zinc.

Un autre objectif de la présente invention est de fournir un procédé de production de base distillats, gazole et/ou kérosène à partir d'une huile végétale ou animale brute ou semi-raffinée comprenant, en amont d'une étape d'hydrotraitement, une étape de pré-traitement poussée permettant d'éliminer les hétéroéléments contenus dans les composés minoritaires tels que le phosphore, le magnésium, le calcium, le fer et/ou le zinc, insolubles dans les conditions de l'hydrotraitement.

En effet, pour être utilisée comme source de biocarburant, l'huile brute telle que définie ci-dessus doit, actuellement être pré-raffinée dans le but d'éliminer les composés minoritaires et en particulier au moins une partie des phospholipides et au moins une partie des acides gras libres. Le pré-raffinage d'une huile brute comprend généralement :
- une étape de démucilagination consistant en l'élimination d'au moins une partie des phospholipides ou mucilages par précipitation en présence d'eau acidulée ;
- une étape de neutralisation, en présence d'une solution de soude, de l'huile démucilaginée permettant de neutraliser au moins une partie des acides gras libres présents dans l'huile. Les pâtes de neutralisation formées lors de cette étape entraînent une partie des impuretés contenues dans l'huile et
- une étape de lavage à l'eau pour éliminer les traces de sels de sodium,
- et une étape de séchage sous vide.

A l'issue du pré-raffinage, on parle d'huile semi-raffinée aussi appelées huiles DNS (Démucilaginée, neutralisée et séchée). En effet, pour l'obtention d'une huile de qualité alimentaire, ou encore "huile raffinée", d'autres opérations telles que la décoloration et la désodorisation sont nécessaires. Cependant, de telles opérations entrainent une perte en rendement en huile.

Un avantage de la présente invention est donc de permettre l'utilisation soit d'une huile végétale ou animale brute n'ayant subi aucun pré-traitement, soit d'une huile végétale ou animale semi raffinée telle que définie ci dessus, dans le procédé de production de bases distillats selon l'invention.

Dans le cas où la charge du procédé de production de bases distillats selon l'invention est une huile végétale ou animale brute, l'étape de pré-traitement poussée placée en amont d'une étape d'hydrotraitement permet d'éliminer les hétéroéléments contenus dans les composés minoritaires tels que le phosphore, le magnésium, le calcium, le fer et/ou le zinc, tout en minimisant la perte en rendement en huile par rapport au procédé de décoloration et/ou de désodorisation classique et en évitant l'ajout de solvant externe.

Dans le cas où la charge du procédé de production de bases distillats selon l'invention est une huile végétale ou animale semi-raffinée, lesdites huiles semi-raffinées contiennent à l'issue de ce pré-raffinage encore jusqu'à 20 ppm de phosphore, calcium, magnésium, fer et/ou zinc, sous forme de phospholipides. (Oils and fats manual : A comprehensive treatise, Volume 1 page 90, Karleskind A. et al.).

Dans les conditions de température du procédé d'hydrotraitement des huiles végétales, ces espèces sont transformées en phosphate mixte de calcium et de magnésium de type CaₓMg_{y}(PO₄)_{z}, insolubles dans le milieu réactionnel. Ces espèces solides se déposent alors dans le lit catalytique et impliquent une conduite délicate du réacteur d'hydrotraitement avec une augmentation de la perte de charge dans le réacteur et une désactivation du catalyseur par bouchage des pores. La durée de cycle se trouve réduite par la présence de ces impuretés.

Il apparaît donc nécessaire de pouvoir contrôler et limiter la teneur en espèces insolubles colmatantes dans l'objectif d'améliorer l'opérabilité des unités industrielles.

Dans le cas où la charge du procédé de production de bases distillats selon l'invention est une huile végétale ou animale semi-raffinée, un avantage de l'invention est donc de fournir un procédé comprenant, en amont d'une étape d'hydrotraitement, une étape de pré-traitement poussée permettant l'élimination de ces espèces insolubles par cristallisation et/ou précipitation à chaud puis par adsorption, jusqu'a obtenir une teneur en phosphore, calcium, magnésium, fer et/ou zinc inférieure à 1,5 ppm et de préférence inférieure à 1 ppm et ainsi d'améliorer l'activité et la durée de vie du catalyseur placé en aval.

La demanderesse a ainsi découvert que l'utilisation pour le prétraitement poussé d'une huile brute d'au moins un lit fixe d'au moins un adsorbant comprenant un oxyde réfractaire poreux dépourvu de métaux catalytiques choisis dans les groupes 6 et 8 à 12, à une température comprise entre 130°C et 320°C, à une pression comprise entre 0,1 et 7 MPa et un temps de séjour de ladite huile brute sur ledit lit fixe compris entre 0,1 et 1 heure, permettait de réduire considérablement la teneur en phosphore, calcium, magnésium, fer et/ou zinc de l'huile à l'issue de l'étape de prétraitement et en particulier d'obtenir une huile dont la teneur en phosphore, calcium, magnésium, fer et/ou zinc est inférieure à 1,5 ppm et de préférence inférieure à 1 ppm.

La demanderesse a également découvert que l'utilisation dudit prétraitement ci-dessus dans le cas du traitement d'une huile végétale ou animale brute ou semi-raffinée telle que définie ci-dessus, en amont d'une étape d'hydrotraitement permettait l'amélioration de l'activité et de la durée de vie du catalyseur d'hydrotraitement par l'élimination des espèces insolubles colmatantes.

### Résumé de l'invention.

La présente invention concerne un procédé de prétraitement d'une huile végétale ou animale brute consistant en le passage de ladite huile dans un réacteur comprenant au moins un lit fixe d'au moins un adsorbant comprenant un oxyde réfractaire poreux dépourvu de métaux catalytiques choisis dans les groupes 6 et 8 à 12, à une température comprise entre 130°C et 320°C, à une pression comprise entre 0,1 et 7 MPa et avec un temps de séjour de ladite huile sur ledit lit fixe compris entre 0,1 et 1 heure.

La présente invention concerne également un procédé de production de base distillats moyens gazole et/ou kérosène à partir d'une huile végétale ou animale brute ou semi-raffinée comprenant :
a) une étape de prétraitement consistant en le passage de ladite huile dans un réacteur comprenant au moins un lit fixe d'au moins un adsorbant comprenant un oxyde réfractaire poreux dépourvu de métaux catalytiques choisis dans les groupes 6 et 8 à 12, à une température comprise entre 130°C et 320°C, à une pression comprise entre 1 et 10 MPa et avec un temps de séjour de ladite huile sur ledit lit fixe compris entre 0,1 et 1 heure,
b) une étape d'hydrotraitement en présence d'au moins un catalyseur en lit fixe, de l'effluent pré-traité issu de l'étape a), à une température comprise entre 200 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 70 et 1000 Nm³ d'hydrogène/m³ de charge,
c) une étape de séparation à partir de l'effluent hydrotraité issu de l'étape b) de l'hydrogène, des gaz et d'au moins une base distillats moyens.

### Description de l'invention

La présente invention concerne un procédé de prétraitement d'une huile végétale ou animale brute consistant en le passage de ladite huile dans un réacteur comprenant au moins un lit fixe d'au moins un adsorbant comprenant un oxyde réfractaire poreux dépourvu de métaux catalytiques choisis dans les groupes 6 et 8 à 12, à une température comprise entre 130°C et 320°C, à une pression comprise entre 0,1 et 7 MPa et avec un temps de séjour de ladite huile sur ledit lit fixe compris entre 0,1 et 1 heure.

La charge traitée dans le procédé de prétraitement selon l'invention est une huile végétale, d'origine terrestre ou aquatique, ou animale brute composée majoritairement de triglycérides à hauteur de 80-98% poids. Les composés mineurs, c'est à dire présents à hauteur de 2 à 20% poids, sont des acides gras libres, des mono- et diglycérides, des composés oxydes de glycérides issus de la dégradation de l'huile, des polymères, des cires (hydrocarbures naturels présentes dans l'huile) des protéines contenant du soufre et/ou de l'azote, des phospholipides, des tocophérols, des stérols, des colorants naturels ainsi que des composés odorants plus ou moins volatils. Lesdites huiles brutes contiennent également, comme composés mineurs, des espèces contenant des hétéroéléments tels que le phosphore, le magnésium, le calcium, le fer ou le zinc à des teneurs pouvant aller jusqu'à 2500 ppm, sous forme principalement de phospholipides et/ou de stérols dans le cas du phosphore, du magnésium et du calcium ou présents dans les pigments pour le cas particulier du magnésium et sous forme de stérols et/ou de savons dans le cas du fer et/ou du zinc.

Les huiles végétale brutes sont avantageusement choisies parmi les huiles végétales d'origine terrestre ou aquatique courantes, telles que les huiles de palme (concrètes ou oléines), de soja, de palmiste, de coprah, de babassu, de colza (ancien ou nouveau), de tournesol (classique ou oléique), de maïs, de coton, les huiles d'arachide, de pourghère (Jatropha curcas), de ricin, de lin et de crambe et toutes les huiles issues par exemple du tournesol ou du colza par modification génétique ou hybridation ou encore provenant d'algues ou d'organisme aquatiques ou parmi les huiles partiellement modifiées par exemple par polymérisation ou oligomérisation, telles que par exemple, les "standolies" d'huile de lin, de tournesol et les huiles végétales soufflées.

Les huiles animales brutes sont avantageusement choisies parmi les graisses animales et de préférence parmi le lard et les graisses composées de résidus de l'industrie alimentaire ou issus des industries de la restauration.

Les huiles utilisées sont avantageusement neutres ou acides, vierges ou recyclées.

Les densités à 15°C de ces huiles sont avantageusement comprises entre 850 et 970 kg/m3 et leur viscosités cinématiques à 40°C entre 20 et 400 mm2/s, et de préférence entre 30 et 50 mm2/s.

Lesdites charges issues de sources renouvelables comportent généralement également différentes impuretés et notamment des hétéroatomes tels que l'azote et/ou le soufre. Les teneurs en azote et en soufre dans les charges issues de sources renouvelables sont généralement comprises entre 1 ppm et 100 ppm poids environ et de préférence inférieures à 100 ppm, selon leur nature. Elles peuvent atteindre jusqu'à 1% poids sur des charges particulières.

Le procédé de pré-traitement selon l'invention peut également être mis en oeuvre à partir d'une charge constituée d'une huile végétale ou animale semi-raffinée, ladite étape de pré-traitement étant conformément à l'invention mise en oeuvre en amont d'une étape d'hydrotraitement. Le pré-raffinage de l'huile permet d'éliminer les composés minoritaires et en particulier au moins une partie des phospholipides et au moins une partie des acides gras libres, ledit pré-raffinage de ladite l'huile brute comprenant :
- une étape de démucilagination consistant en l'élimination d'au moins une partie des phospholipides ou mucilages par précipitation en présence d'eau acidulée ;
- une étape de neutralisation, en présence d'une solution de soude, de l'huile démucilaginée permettant de neutraliser au moins une partie des acides gras libres présents dans l'huile. Les pâtes de neutralisation formées lors de cette étape entraînent une partie des impuretés contenues dans l'huile et
- une étape de lavage à l'eau pour éliminer les traces de sels de sodium et
- une étape de séchage à vide.

A l'issue du pré-raffinage, on parle d'huile semi-raffinée aussi appelées huiles DNS.

La présente invention est particulièrement dédiée à la préparation de bases carburant distillats moyens, gazoles et/ou kérosène correspondant aux nouvelles normes environnementales, à partir desdites huiles brutes ou semi-raffinées.

La présente invention concerne donc également un procédé de production de base distillats moyens à partir d'une huile végétale ou animale brute ou semi-raffinée comprenant :
a) une étape de prétraitement consistant en le passage de ladite huile dans un réacteur comprenant au moins un lit fixe d'au moins un adsorbant comprenant un oxyde réfractaire poreux dépourvu de métaux catalytiques choisis dans les groupes 6 et 8 à 12, à une température comprise entre 130°C et 320°C, à une pression comprise entre 1 et 10 MPa et avec un temps de séjour de ladite huile sur ledit lit fixe compris entre 0,1 et 1 heure,
b) une étape d'hydrotraitement en présence d'au moins un catalyseur en lit fixe, de l'effluent prétraité issu de l'étape a), à une température comprise entre 200 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 70 et 1000 Nm³ d'hydrogène/m³ de charge,
c) une étape de séparation à partir de l'effluent hydrotraité issu de l'étape b) de l'hydrogène, des gaz et d'au moins une base gazole.

### Prétraitement de l'huile brute ou semi raffinée.

Le procédé de prétraitement dans le cas d'une huile végétale ou animale brute ou l'étape de prétraitement a) du procédé de production de base gazole selon l'invention dans le cas d'une huile végétale ou animale semi-raffinée sont décrites simultanément.

La fonction recherchée lors du prétraitement de l'huile brute ou semi raffinée étant uniquement une transformation thermique des hétéroéléments en phosphate mixte et de les immobiliser par adsorption, et non une fonction catalytique, le réacteur de prétraitement comprend au moins un lit fixe d'un matériau adsorbant dépourvu de métaux catalytiques.

Conformément à l'invention, le prétraitement de ladite huile végétale ou animale, brute ou semi raffinée, consiste à faire passer l'huile dans un réacteur comprenant au moins un lit fixe d'au moins un adsorbant comprenant un oxyde réfractaire poreux dépourvu de métaux catalytiques choisis dans les groupes 6 et 8 à 12, à une température comprise entre 130°C et 320°C, de préférence comprise entre 160 et 250°C et de préférence entre 160 et 220°C, à une pression comprise entre 0,1 et 10 MPa, de préférence comprise entre 0,3 et 1 MPa et avec un temps de séjour de ladite huile sur ledit lit fixe compris entre 0,1 et 2 heures et de préférence comprise entre 0,2 et 1,5 heures.

Conformément à l'invention, les adsorbants utilisés lors du prétraitement sont des adsorbants comprenant un oxyde réfractaire poreux dépourvu de métaux catalytiques choisis dans les groupes 6 et 8 à 12, ledit oxyde réfractaire poreux étant de préférence choisi parmi l'alumine, éventuellement activée et la silice alumine.

De manière très préféré, lesdits adsorbants sont constitués à 100% d'un oxyde réfractaire poreux de préférence choisi parmi l'alumine, éventuellement activée et la silice alumine.

Conformément à l'invention, les adsorbants sont utilisés en lit fixe, aussi appelés lit de garde, avec la particularité que ledit lit de garde est utilisé avec une température minimum d'activation de la réaction thermique de cristallisation et/ou précipitation recherchée.

Les adsorbants utilisés dans le prétraitement selon la présente invention sont avantageusement mis en forme et sont de préférence de forme sphériques, extrudées oblongues, cylindriques, creuses ou pleines, cylindriques torsadées, multilobées, par exemple avec un nombre de lobes compris entre 2 et 5 ou sous forme d'anneaux.

De manière préférée, les adsorbants sont sous forme sphérique ou extrudée, avec un diamètre compris entre 0,5 et 20 mm et de préférence entre 0,5 et 10 mm, la forme sphérique étant très préférée.

Lesdits adsorbants peuvent avantageusement présenter des formes géométriques plus particulières afin d'augmenter leur fraction de vide. Les adsorbants peuvent également avantageusement présenter les formes suivantes : cylindres creux, anneaux creux, anneaux de Rashig, cylindres creux dentelés, cylindres creux crénelés, roues de charrettes, selle de Blend, cylindres à multiples trous.

La fraction de vide de ces adsorbants est avantageusement comprise entre 0,2 et 0,75 et de préférence entre 0,35 et 0,5.

Leur diamètre extérieur varie avantageusement entre 1 et 35 mm.

Lesdits adsorbants peuvent avantageusement être utilisés seuls ou en mélange. Il est particulièrement avantageux de superposer des adsorbants différents dans au moins deux lits fixes différents de hauteur variable, les adsorbants ayant le plus fort taux de vide étant de préférence utilisés dans le ou les premiers lits fixes, en entrée du réacteur de prétraitement. Des adsorbants préférés sont avantageusement des adsorbants présentant une macroporosité.

De préférence, lesdits adsorbants macroporeux présentent un volume macroporeux, mesuré par intrusion au mercure, c'est à dire un volume des pores dont le diamètre moyen est de 500 A, supérieur à 0,1 ml/g, et de manière préférée, compris entre 0,125 et 0,4 ml/g. Lesdits adsorbants présentent également avantageusement un volume poreux total supérieur à 0,60 ml/g, et de préférence compris entre 0,625 et 1,5 ml/g et une surface spécifique exprimée en S_{BET} avantageusement comprise entre 30 m²/g et 320 m²/g.

Un adsorbant très préféré est une alumine macroporeuse commercialisée par la société Axens et référencée au catalogue sous la référence ACT 139.

Lors dudit prétraitement de l'huile brute ou semi raffinée, on observe, après chauffage dans les bonnes conditions de température, la précipitation d'un solide comprenant les impuretés à base de phosphore, calcium, magnésium, fer et/ou zinc.

Les impuretés solides viennent alors se déposer sur le lit fixe d'adsorbant, encore appelé lit de garde avec la particularité que ledit lit de garde est utilisé avec une température minimum d'activation de la réaction thermique de cristallisation et/ou précipitation recherchée.

Selon un mode de réalisation préféré du prétraitement selon la présente invention, ledit prétraitement est réalisé dans un réacteur comprenant plusieurs lits fixes placés en parallèle, et permutables. Ainsi, il est possible de soustraire un des lits de garde à des fins de nettoyage lorsque le ou les adsorbants le constituant sont saturés en impuretés solides.

Plusieurs options sont envisageables pour la phase de nettoyage du lit fixe ou lit de garde saturé.

Selon un premier mode de réalisation, le lit de garde saturé peut être extrait du réacteur de prétraitement. Dans ce cas, on peut avantageusement vider le liquide, puis le solide et nettoyer cette partie du réacteur. Le rechargement peut avantageusement être fait avec une nouvelle charge d'adsorbant, ou bien avec l'ancienne charge nettoyée, par exemple au solvant ou régénérée par brûlage, avant de replacer cette partie du réacteur dans le réacteur de prétraitement.

Selon un deuxième mode de réalisation, le nettoyage du lit d'adsorbants saturé peut avantageusement se faire par rinçage en ligne avec un solvant à co- ou contre-courant pour décrocher et/ou solubiliser les particules présentes. Le solvant est avantageusement un hydrocarbure léger polaire ou non, et est avantageusement choisi parmi le méthanol, le pentane, l'éthanol, l'heptane ou l'hexane. Après un séparation en sortie de réacteur entre le solide extrait et le solvant d'extraction, le solvant est avantageusement recyclé dans le réacteur pour poursuivre l'extraction.

Selon un troisième mode de réalisation, la phase de nettoyage du lit de garde saturé en impuretés solides est avantageusement réalisée par brûlage in-situ.

Dans le cas ou le prétraitement selon l'invention est mis en oeuvre en lit fixe permutable d'au moins un adsorbant, la permutation est avantageusement réalisée lorsque la teneur en phosphore, dans l'huile après ledit prétraitement est supérieure à 2 ppm.

Ainsi, grâce au prétraitement selon l'invention, la teneur en phosphore, indicatrice de la teneur en hétéroélément dans l'huile après pré-traitement est inférieure à 1,5 ppm et de préférence inférieure à 1 ppm. En effet, le phosphore sert de traceur car il est présent dans les composés les plus difficiles à enlever. Par conséquent, la teneur en calcium, magnésium, fer et /ou zinc est également inférieure à 1,5 ppm et de préférence inférieure à 1 ppm.

La teneur en phosphore, calcium, magnésium, fer et/ou zinc est déterminée par analyse par spectroscopie d'émission à plasma induit par haute fréquence (ICP-OES), par exemple avec la méthode décrite dans la norme EN 14 241, soit avec une sensibilité pour ces éléments donnée à 1 ppm.

Dans le cas où ledit prétraitement est placé en amont d'une étape d'hydrotraitement et constitue l'étape a) d'un procédé de production de base distillats moyens gazole et/ou kérosène à partir d'une huile végétale ou animale brute ou semi-raffinée, l'effluent prétraité issu de l'étape a) constitue la charge de l'étape b) d'hydrotraitement.

### Étape b) : Hydrotraitement de la charge prétraitée.

Conformément à l'étape b) du procédé selon l'invention, l'effluent prétraité issu de l'étape a) et contenant moins de 1 ppm de phosphore, calcium, magnésium, fer et/ou zinc, est mis au contact d'au moins un catalyseur en lit fixe à une température comprise entre 200 et 450°C, de préférence entre 220 et 350°C, de manière préférée entre 220 et 320°C, et de manière encore plus préférée entre 220 et 310°C. La pression est comprise entre 1 MPa et 10 MPa, de manière préférée entre 1 MPa et 6 MPa et de manière encore plus préférée entre 1 MPa et 4 MPa. La vitesse spatiale horaire est comprise entre 0,1 h-1 et 10 h-1. La charge est mise au contact du catalyseur en présence d'hydrogène. La quantité totale d'hydrogène mélangée à la charge est telle que le ratio hydrogène/charge est compris entre 70 et 1000 Nm³ d'hydrogène/m³ de charge et de manière préférée compris entre 150 et 750 Nm³ d'hydrogène/m³ de charge.

L'hydrogène peut avantageusement venir d'un appoint d'hydrogène et/ou du recyclage du gaz riche en hydrogène issu de l'étape c) de séparation, ledit gaz riche en hydrogène ayant préalablement subi un ou plusieurs traitements de purification intermédiaire avant d'être recyclé et mélangé une partie de l'effluent prétraité issu de l'étape a).

Dans l'étape b) du procédé de production de bases gazoles selon l'invention, le catalyseur en lit fixe est avantageusement un catalyseur d'hydrotraitement comprenant une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux. Ce support peut également avantageusement renfermer d'autres composés et par exemple des oxydes choisis dans le groupe formé par l'oxyde de bore, la zircone, l'oxyde de titane, l'anhydride phosphorique. Le support préférée est un support d'alumine et de manière très préférée d'alumine η, δ ou y.

Ledit catalyseur est avantageusement un catalyseur comprenant des métaux du groupe VIII de préférence choisis parmi le nickel et le cobalt, pris seul ou en mélange, de préférence en association avec au moins un métal du groupe VIB de préférence choisi parmi le molybdène et le tungstène, pris seul ou en mélange.

La teneur en oxydes de métaux des groupes VIII et de préférence en oxyde de nickel est avantageusement comprise entre 0,5 et 10 % en poids d'oxyde de nickel (NiO) et de préférence entre 1 et 5 % en poids d'oxyde de nickel et la teneur en oxydes de métaux des groupes VIB et de préférence en trioxyde de molybdène est avantageusement comprise entre 1 et 30 % en poids d'oxyde de molybdène (MoO₃), de préférence de 5 à 25 % en poids, les pourcentages étant exprimés en % poids par rapport à la masse totale du catalyseur.

La teneur totale en oxydes de métaux des groupes VIB et VIII dans le catalyseur utilisé dans l'étape a) est avantageusement comprise entre 5 et 40 % en poids et de manière préférée comprise entre 6 et 30 % en poids par rapport à la masse totale du catalyseur.

Le rapport pondéral exprimé en oxyde métallique entre métal (ou métaux) du groupe VIB sur métal (ou métaux) du groupe VIII est avantageusement compris entre 20 et 1 et de manière préférée entre 10 et 2.

Ledit catalyseur utilisé dans l'étape b) du procédé selon l'invention doit être avantageusement caractérisé par un fort pouvoir hydrogénant de façon à orienter le plus possible la sélectivité de la réaction vers une hydrogénation conservant le nombre d'atomes de carbone des chaînes grasses c'est à dire la voie hydrodéoxygénation, ceci afin de maximiser le rendement en hydrocarbures entrant dans le domaine de distillation des gazoles et/ou des kérosènes. C'est pourquoi de manière préférée, on opère à une température relativement basse. Maximiser la fonction hydrogénante permet également de limiter les réactions de polymérisation et/ou de condensation conduisant à la formation de coke qui dégraderait la stabilité des performances catalytiques. De façon préférée on utilise un catalyseur de type Ni ou NiMo.

Ledit catalyseur utilisé dans l'étape b) d'hydrotraitement du procédé selon l'invention peut également avantageusement contenir un élément dopant choisi parmi le phosphore et le bore, pris seuls ou en mélange. Ledit élément dopant peut être introduit dans la matrice ou de préférence être déposé sur le support. On peut également déposer du silicium sur le support, seul ou avec le phosphore et/ou le bore et/ou le fluor.

La teneur en poids d'oxyde dudit élément dopant est avantageusement inférieure à 20 % et de manière préférée inférieure à 10 % et elle est avantageusement d'au moins 0.001 % par rapport à la masse totale du catalyseur.

Les métaux des catalyseurs utilisés dans l'étape b) d'hydrotraitement du procédé selon l'invention sont des métaux sulfurés ou des phases métalliques et de préférence des métaux sulfurés.

On ne sortirait pas du cadre de la présente invention en utilisant dans l'étape b) d'hydrotraitement du procédé selon l'invention, de manière simultanée ou de manière successive, un seul catalyseur ou plusieurs catalyseurs différents. Cette étape peut être effectuée industriellement dans un ou plusieurs réacteurs avec un ou plusieurs lits catalytiques et de préférence à courant descendant de liquide.

### Étape c) : Séparation de l'effluent hydrotraité issu de l'étape b).

Conformément à l'étape c) du procédé selon l'invention, l'effluent hydrotraité issu de l'étape b) est soumis au moins en partie, et de préférence en totalité, à une ou plusieurs séparations. Le but de cette étape est de séparer les gaz du liquide, et notamment, de récupérer les gaz riches en hydrogène pouvant contenir également des gaz tels que CO et CO₂ et au moins une base gazole liquide hydrocarbonée à teneur en soufre inférieure à 10 ppm poids. La séparation est effectuée selon toutes méthodes de séparation connue de l'homme du métier. L'étape de séparation peut avantageusement être mise en oeuvre par toute méthode connue de l'homme du métier telle que par exemple la combinaison de un ou plusieurs séparateurs haute et/ou basse pression, et/ou d'étapes de distillation et/ou de strippage haute et/ou basse pression.

L'eau éventuellement formée lors de l'étape b) d'hydrotraitement du procédé selon l'invention peut également être avantageusement séparée au moins en partie de la base gazole hydrocarbonée liquide. L'étape c) de séparation peut donc avantageusement être suivie d'une étape optionnelle d'élimination d'au moins une partie de l'eau et de préférence la totalité de l'eau.

L'étape optionnelle d'enlèvement d'eau a pour but d'éliminer au moins en partie l'eau produite lors des réactions d'hydrotraitement. On entend par élimination de l'eau, l'élimination de l'eau produite par les réactions d'hydrodeoxygénation (HDO) qui ont lieu lors de l'étape b) d'hydrotraitement. L'élimination plus ou moins complète de l'eau peut être fonction de la tolérance à l'eau du catalyseur d'hydroisomérisation utilisé dans l'étape c) ultérieure du procédé selon l'invention. L'élimination de l'eau peut être réalisée par toutes les méthodes et techniques connues de l'homme du métier, par exemple par séchage, passage sur un dessicant, flash, décantation....

La base distillats moyens, gazole et/ou kérosène, hydrocarbonée liquide est essentiellement constituée de n-paraffines qui peuvent être incorporées au pool gazole et/ou kérosène. De manière à améliorer les propriétés à froid de ladite base gazole hydrocarbonée liquide, une étape d'hydroisomérisation peut avantageusement être mise en oeuvre pour transformer les n-paraffines en paraffines branchées présentant de meilleures propriétés à froid.

L'étape d'hydroisomérisation est avantageusement mise en oeuvre dans un réacteur séparé, dans les conditions opératoires et catalytiques connues de l'homme du métier.

### Traitement et recyclage des gaz

Le flux de gaz riche en hydrogène peut avantageusement venir d'un appoint d'hydrogène et/ou du recyclage de l'effluent gazeux issu de l'étape c) de séparation, l'effluent gazeux contenant un gaz riche en hydrogène ayant préalablement subi un ou plusieurs traitements de purification intermédiaire, de préférence au moins un lavage avec au moins une amine avant d'être recyclé et mélangé à la charge constituée de l'huile végétale ou animale semi raffinée de l'étape a) et/ou à une partie de l'effluent prétraité issu de l'étape a) et constituant la charge de l'étape b) d'hydrotraitement.

En effet, au moins une partie de l'hydrogène d'appoint et/ou de recyle peut avantageusement être ajoutée dans l'étape a) de prétraitement dans le but de fluidifier l'écoulement de ladite charge constituée de l'huile végétale ou animale semi raffinée

L'hydrogène de recycle peut avantageusement être introduit avec l'effluent prétraité entrant dans l'étape b) d'hydrotraitement sous forme d'hydrogène de trempe, entre les lits de catalyseurs d'hydrotraitement.

Il est également avantageux d'additionner au gaz de recyclage une certaine quantité de composé soufré (tel que par exemple le DMDS, di-méthyl disulfure), qui par décomposition thermique produit de l'hydrogène sulfuré H₂S. Ce dispositif permet de maintenir si nécessaire le catalyseur de l'étape b) d'hydrotraitement à l'état sulfuré. De façon avantageuse, la quantité de composé soufré introduite est telle que la teneur en H₂S dans le gaz de recycle est au moins de 15 ppm volume, de préférence d'au moins 0,1 % vol, voire d'au au moins 0.2 % vol.

Un autre aspect de l'invention, consiste à mettre en oeuvre ledit prétraitement selon l'invention, en amont d'autre procédés tels que par exemple à mettre en oeuvre un enchainement comprenant un première étape de pré-traitement décrite selon l'invention suivie d'une deuxième étape de craquage catalytique décrite selon la demande de brevet WO2007/090884 de telle sorte que les conditions opératoires et les catalyseurs utilisés dans ladite étape de craquage catalytique soient mises en oeuvre selon les méthodes connues de l'homme du métier de manière à maximiser le rendement en distillats moyens.

Le prétraitement poussé selon l'invention, d'une huile brute permet de réduire considérablement la teneur en phosphore, calcium, magnésium, fer et/ou zinc de ladite huile à l'issu dudit prétraitement et en particulier d'obtenir une huile prétraitée dont la teneur en phosphore, calcium, magnésium, fer et/ou zinc est inférieure à 1,5 ppm et de préférence inférieure à 1 ppm.

La mise en oeuvre d'une étape de prétraitement telle que définie ci-dessus, dans le cas du traitement d'une huile végétale ou animale brute ou semi-raffinée, en amont d'une étape d'hydrotraitement permet par l'élimination, dans la charge à hydrotraiter, des espèces insolubles colmatantes, l'amélioration de l'activité et de la durée de vie du catalyseur d'hydrotraitement.

Les exemples ci dessous illustrent l'invention, sans en limiter la portée.

### Exemples:

Les exemples 1 et 2 ont été réalisés dans un réacteur lit fixe traversé avec une huile brute de colza prétraitée dans des conditions différentes. Ils permettent de comparer l'impact des conditions opératoires du prétraitement selon l'invention sur l'efficacité dudit prétraitement de l'huile brute. L'huile utilisée dans ces deux exemples est de l'huile brute de colza, dont la composition globale est donnée dans les Tableau 1 et 2. Cependant, toute autre huile d'origine végétale brute pourrait donner des résultats analogues.

**Tableau 1 : Composition globale de l'huile de colza brute.**

| **Glycéride d'acides gras** | **Nature de la chaîne grasse** | **% en masse** |
|---|---|---|
| Myristique | C14 :0 | 0,1 |
| Palmitique | C16 :0 | 5 |
| Palmitoléique | C16 :1 | < 0,5 |
| Stéarique | C18 :0 | 2 |
| Oléique | C18 :1 | 59 |
| Linoléique | C18 :2 | 21 |
| Linolénique | C18 :3 | 9 |
| Arachidique | C20 :0 | < 0,5 |
| Gadoléique | C20 :1 | 1 |
| Béhénique | C22 :0 | < 0,5 |
| Erucique | C22 :1 | < 1 |
| Lignocérique | C24 :0 | < 1 |

| **Analyse des phospholipides** | | **ppm** |
|---|---|---|
| Phosphatidyéthanolamine | (PE) | 16,8 |
| Phospatodylcholine | (PC) | 21,9 |
| Sphingomyéline | (SM) | <0,1 |
| Lysophosphatidylcholine | (LPC) | <0,1 |
| Lysophosphatidyléthanolamine | (LPE) | <0,1 |
| Acide phosphatidique | (AP) | 61,3 |
| Phosphtidyl Serine | (PS) | <0,1 |

La teneur en phosphore, magnésium, calcium de l'huile brute est donnée dans le Tableau 2. La teneur en phosphore, calcium, magnésium et fer est déterminée par analyse par spectroscopie d'émission à plasma induit par haute fréquence (ICP-OES), avec la méthode décrite dans la norme EN 14 241, soit avec une sensibilité pour ces éléments donnée à 1 ppm.

**Tableau 2 : Composition en P, Ca, Mg de l'huile brute de colza brute.**

| **Espèces** | **teneur en ppm** |
|---|---|
| P | 101 |
| Ca | 86 |
| Mg | 14 |
| Fe | 1 |
| | |

| **Composition globale de l'huile brute de colza.** | |
|---|---|
| | teneur en % poids |
| Triglycérides | 97,2 |
| Diglycérides + stérols | 0,2 |
| Stérols estérifiés | 1,8 |
| Stérols libres + autres dont phospholipides | 0,8 |

L'indice d'acide de l'huile de colza brute, déterminée selon la méthode EN14104 est égal à 1,2 mg KOH/g huile. Ledit indice d'acide est proportionnel au nombre d'acide gras présents dans l'huile brute.

L'huile brute est prétraitée dans un réacteur de prétraitement de volume de 3,6L chargé entièrement d'un lit fixe d'adsorbant constitué d'une alumine sphérique de diamètre compris entre 3 et 6mm.

L'alumine présente un volume macroporeux, mesuré par intrusion au mercure, c'est à dire un volume des pores dont le diamètre moyen est de 500 A, égal à 0,35 ml/g, un volume poreux total égal à 1,2 ml/g et une surface spécifiques exprimée en SBET égale à 140 m2/g.

Dans les deux exemples suivants, seul la température change.

### Exemple 1 non conforme à l'invention

Dans l'exemple 1, les conditions de mises en oeuvre sont 120°C, 0,7 MPa, avec un temps de séjour égal à 1 heure.

A la sortie de ce réacteur, la composition en acide gras est inchangée (voir tableau 1). En revanche, la teneur en phosphore, calcium et magnésium et fer est donnée dans le Tableau 3. Dans ces conditions opératoires, la purification est incomplète.

**Tableau 3 : Composition en P, Ca, Mg, Fe de l'huile de colza après prétraitement à 180°C**

| **Espèces** | **teneur en ppm** |
|---|---|
| P | 18ppm |
| Ca | 15ppm |
| Mg | 2ppm |
| Fe | <1ppm |

### Exemple 2 : conforme à l'invention

Dans l'exemple 2, les conditions de mises en oeuvre sont 180°C, 0,7 MPa, avec un temps de séjour égal à 1 heure

A la sortie de ce réacteur, la composition en acide gras est inchangée (voir tableau 1). En revanche, la teneur en phosphore, calcium et magnésium et fer est donnée dans le Tableau 4.

**Tableau 4 : Composition en P, Ca, Ma, Fe de l'huile brute de colza après prétraitement à 180°C**

| **Espèces** | **teneur en ppm** |
|---|---|
| P | <1 ppm |
| Ca | <1 ppm |
| Mg | <1 ppm |
| Fe | <1 ppm |

La limite de détection de l'appareil analytique ne permet pas la quantification exacte des composés. De plus, dans les exemples, la teneur en Fe déterminée par ICP est inférieure à la limite de quantification (<1 ppm) aussi bien sur la charge que sur l'effluent. Toutefois, le prétraitement montre également son efficacité au regard de la captation du fer comme le montre l'analyse MEB-EDX faite sur la masse d'adsorbants après test. En effet, l'analyse qualitative montre la présence de zones riches en fer élémentaire non associées à un contre ion montrant qu'il ne s'agit pas d'un résidu de corrosion.

Cependant, les résultats montrent que le prétraitement poussé selon l'invention, d'une huile brute permet de réduire considérablement la teneur en phosphore, calcium, magnésium et fer de ladite huile à l'issu dudit prétraitement et en particulier d'obtenir une huile prétraitée dont la teneur en phosphore, calcium, magnésium et fer est inférieure à 1 ppm.

Les exemples 3 et 4 ont été réalisés dans un réacteur lit fixe traversé avec une huile brute de colza dont la composition en acide gras est donnée dans le tableau 1 et la teneur en P, Ca, Mg, Fe est donnée dans le tableau 2.

### exemple 3: conforme à l'invention

Dans l'exemple 3 conforme à l'invention, ladite huile est prétraitée, dans une étape a) dans les conditions de l'exemple 2, puis l'effluent prétraité issu de l'étape a) (explicité dans l'exemple 2) est hydrotraité pour produire une base distillats moyens.

La teneur en phosphore, magnésium, calcium de l'huile brute prétraitée selon l'exemple 2 est donnée dans le tableau 3.

L'huile de colza brute prétraitée subit ensuite une étape d'hydrotraitement en présence de 190 ml de catalyseur d'hydrotraitement à base de nickel et de molybdène, présentant une teneur en oxyde de nickel égale à 3 % poids, et une teneur en oxyde de molybdène égale à 16 % poids et une teneur en P₂O₅ égale à 6%, le catalyseur étant préalablement sulfuré.

700 Nm³ d'hydrogène/m³ de charge sont introduits dans le réacteur maintenu à une température de 300°C et à une pression de 5 MPa. Le débit volumique de charge est ajusté de façon à respecter le rapport vvh=débit volumique charge/ volume de catalyseur= 1 h-1. Le niveau de conversion est directement corrélé à la densité. Plus la densité est importante et moins la conversion de la charge est importante. Les densités de charge et effluents produits et sont respectivement reportées dans le tableau 5.

**Tableau 5. Évolution de la densité des effluents obtenus par hydrotraitement de l'huile brute de colza prétraitée et de la température (P = 50 bar, VVH = 1 h-1, H2/charge = 700 l/l).**

| | Durée de fonctionnement (h) | densité |
|---|---|---|
| Charge | 0 | 0,9199 |
| T°C | | |
| 280 | 640 | 0,8047 |
| 300 | 750 | 0,7913 |

Le tableau 5 montre une activité stable pour chaque température. Aucune surpression différentielle, c'est à dire aucun colmatage n'est constaté durant l'étape d'hydrotraitement en plus de 600h.

### Exemple 4 : non conforme à l'invention

Dans l'exemple 4, l'huile brute de colza subit directement une étape d'hydrotraitement sans étape de prétraitement préalable en présence de 190 ml de catalyseur d'hydrotraitement à base de nickel et de molybdène, présentant une teneur en oxyde de nickel égale à 3 % poids, et une teneur en oxyde de molybdène égale à 16 % poids et une teneur en P2O5 égale à 6%, le catalyseur étant préalablement sulfuré.

Le débit volumique de charge est ajusté de façon à respecter le rapport wh=débit volumique charge/ volume de catalyseur= 1 h-1.

Le niveau de conversion est directement corrélé à la densité. Plus la densité est importante et moins la conversion de la charge est importante. Les densités de charge et effluents produits et sont respectivement reportées le tableau 6.

**Tableau 6. Évolution de la densité des effluents obtenus par hydrotraitement de l'huile brute de colza non prétraitée et de la température (P = 50 bar, VVH = 1 h-1, H2/charge = 700 l/l).**

| | **huile de colza brute** | |
|---|---|---|
| | **Durée de fonctionnement (h)** | **densité** |
| Charge | 0 | 0,9224 |
| T°C | | |
| 280 | 100 | 0,7961 |
| 300 | 113 | 0,7936 (début de palier) |
| | 185 | 0,8265 |
| | 209 | 0,8669 (fin de palier) |
| 350 | 257 | 0,8912 |

Tout d'abord, nous constatons que l'huile de colza brute à une densité plus importante que l'huile de colza prétraitée selon l'exemple 2 (huile prétraitée : 0,9199 / brute : 0,9224). La densité des effluents produits par hydrotraitement de l'huile brute indique une conversion tout à fait équivalente à 300°C (prétraitée : 0,7913 / brute : 0,7961) mettant en évidence une très bonne activité du catalyseur HR548 quel que soit le niveau de raffinage de l'huile de colza après une centaine d'heures de fonctionnement. Néanmoins, nous constatons ensuite une augmentation importante de la densité jusqu'à atteindre une valeur de 0,8669 après 200 heures, traduisant une dégradation du niveau de conversion de la charge et donc une désactivation progressive du catalyseur.

A la vue de ces résultats, il a été choisi de continuer l'essai à une température de 350°C. Néanmoins, les niveaux de conversion se sont encore dégradés (densité de 0,8912). L'opérabilité de l'unité devenant difficile dans ces conditions avec l'apparition de surpression dans le réacteur, le test a finalement été arrêté après seulement 260 heures de fonctionnement.

La désactivation du catalyseur lors de la transformation de l'huile de colza brute s'est traduite par une forte augmentation de la densité des effluents produits et s'est accompagnée d'une augmentation de la surpression dans le réacteur. Après déchargement il a été observé un résidu solide en grande quantité tout le long du réacteur.

Le prétraitement de l'huile tel que défini dans l'exemple 3 permet une activité catalytique stable, plus importante et une meilleure opérabilité du réacteur.

## Revendications

1. Procédé de prétraitement d'une huile végétale ou animale brute consistant en le passage de ladite huile dans un réacteur comprenant au moins un lit fixe d'au moins un adsorbant comprenant un oxyde réfractaire poreux dépourvu de métaux catalytiques choisis dans les groupes 6 et 8 à 12, à une température comprise entre 130°C et 320°C, à une pression comprise entre 0,1 et 7 MPa et avec un temps de séjour de ladite huile sur ledit lit fixe compris entre 0,1 et 1 heure.

2. Procédé de prétraitement selon la revendication 1 dans lequel l'huile végétale ou animale brute comprend de 95-98% poids de triglycérides et de 2 à 5% poids d'acides gras libres, de mono- et diglycérides, de phospholipides, de tocophérols, de stérols, de colorants naturels ainsi que de composés odorants et des composés tels que le phosphore, le magnésium, le calcium, le fer et/ou le zinc à des teneurs pouvant aller jusqu'à 2500 ppm, sous forme de phospholipides et/ou de stérols dans le cas du phosphore, du magnésium et du calcium ou présents dans les pigments pour le cas du magnésium et sous forme de stérols et/ou de savons dans le cas du fer et/ou du zinc.

3. Procédé de prétraitement selon l'une des revendications 1 ou 2 dans lequel ladite huile végétale ou animale brute est pré-raffinée avant le procédé de prétraitement, le pré-raffinage de ladite l'huile brute comprenant :
- une étape de démucilagination consistant en l'élimination d'au moins une partie des phospholipides ou mucilages par précipitation en présence d'eau acidulée ;
- une étape de neutralisation, en présence d'une solution de soude, de l'huile démucilaginée permettant de neutraliser au moins une partie des acides gras libres présents dans l'huile et
- une étape de lavage à l'eau pour éliminer les traces de sels de sodium et
- une étape de séchage sous vide.

4. Procédé de production de base distillats moyens comprenant :
a) une étape de prétraitement selon la revendication 1 à 3,
b) une étape d'hydrotraitement en présence d'au moins un catalyseur en lit fixe, de l'effluent prétraité issu de l'étape a), à une température comprise entre 200 et 450°C, à une pression comprise entre 1 MPa et 10 MPa, à une vitesse spatiale horaire comprise entre 0,1 h-1 et 10 h-1 et en présence d'une quantité totale d'hydrogène mélangée à la charge telle que le ratio hydrogène/charge soit compris entre 70 et 1000 Nm3 d'hydrogène/m3 de charge,
c) une étape de séparation à partir de l'effluent hydrotraité issu de l'étape b) de l'hydrogène, des gaz et d'au moins une base gazole.

5. Procédé de production de base gazole selon la revendication 4 dans lequel lesdits adsorbants utilisés dans l'étape a) de prétraitement sont choisis parmi l'alumine, éventuellement activée et la silice alumine.

6. Procédé de production de base gazole selon la revendication 5 dans lequel lesdits adsorbants utilisés dans l'étape a) de prétraitement sont constitués à 100% d'un oxyde réfractaire poreux choisi parmi l'alumine, éventuellement activée et la silice alumine.

7. Procédé de production de base gazole selon l'une des revendications 4 à 6 dans lequel lesdits adsorbants présente une forme sphérique ou extrudée, avec un diamètre compris entre 0,5 et 10 mm.

8. Procédé de production de base gazole selon l'une des revendications 4 à 7 dans lequel lesdits adsorbants présentent un volume macroporeux, mesuré par intrusion au mercure, c'est à dire un volume des pores dont le diamètre moyen est de 500 A, supérieur à 0,1 ml/g, un volume poreux total supérieur à 0,60 ml/g, et une surface spécifique exprimée en S_{BET} comprise entre 30 m²/g et 320 m²/g.

9. Procédé de production de base gazole selon l'une des revendications 4 à 8 dans lequel ledit prétraitement est réalisé à une température comprise entre 160 et 250°C à une pression comprise entre 0,3 et 1 MPa et avec un temps de séjour compris entre 0,2 et 1,5 heure.

10. Procédé de production de base gazole selon l'une des revendications 4 à 9 dans lequel ledit prétraitement est réalisé dans un réacteur comprenant plusieurs lits fixes placés en parallèle, et permutables.

11. Procédé de production de base gazole selon l'une des revendications 4 à 10 dans lequel le catalyseur en lit fixe utilisé dans l'étape b) d'hydrotraitement est un catalyseur d'hydrotraitement comprenant une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux.

12. Procédé de production de base gazole selon l'une des revendications 4 à 11 dans lequel la teneur en oxyde de nickel est comprise entre 0,5 et 10 % en poids et la teneur en trioxyde de molybdène est comprise entre 1 et 30 % en poids, les pourcentages étant exprimés en % poids par rapport à la masse totale du catalyseur.
